# EUROPÄISCHE PATENTSCHRIFT

(11) **EP 4 048 574 B1**
(45) Veröffentlichungstag und Bekanntmachung des Hinweises auf die Patenterteilung: **04.12.2024**
(21) Anmeldenummer: 20793642.8
(22) Anmeldetag: 19.10.2020
(51) Int. Cl.: B62D 5/00

(54) **AUSWERTEVORRICHTUNG ZUR FEHLERTOLERANTEN AUSWERTUNG VON SENSORSIGNALEN FÜR EIN MOTORSTEUERGERÄT EINER KRAFTFAHRZEUGLENKUNG UND KRAFTFAHRZEUGLENKUNG**
EVALUATION DEVICE FOR FAULT-TOLERANT EVALUATION OF SENSOR SIGNALS FOR A MOTOR CONTROL UNIT OF A MOTOR VEHICLE STEERING SYSTEM, AND MOTOR VEHICLE STEERING SYSTEM
DISPOSITIF D'ÉVALUATION CONÇU POUR RÉALISER UNE ÉVALUATION TOLÉRANTE AUX ERREURS DE SIGNAUX DE DÉTECTION POUR UN APPAREIL DE COMMANDE DE MOTEUR D'UNE DIRECTION DE VÉHICULE AUTOMOBILE ET DIRECTION DE VÉHICULE AUTOMOBILE

(30) Priorität: 23.10.2019 DE 102019216342
(43) Veröffentlichungstag der Anmeldung: 31.08.2022
(73) Patentinhaber: thyssenkrupp Presta AG, 9492 Eschen (LI); thyssenkrupp AG, 45143 Essen (DE)
(72) Erfinder: TIBORI, Tamás Tibold, 1083 Budapest (HU)
(74) Vertreter: thyssenkrupp Intellectual Property GmbH
(86) Internationale Anmeldenummer: PCT/EP2020/079302
(87) Internationale Veröffentlichungsnummer: WO 2021/078660

(56) Entgegenhaltungen:
- EP-A1- 3 299 257
- EP-A1- 3 584 140
- EP-A2- 0 525 574
- DE-A1- 102017 112 183
- US-A1- 2016 103 450
- US-A1- 2018 086 368
- US-A1- 2018 093 703
- US-A1- 2019 039 643
- US-A1- 2019 118 856
- US-A1- 2019 118 857
- US-B2- 7 254 470

## Beschreibung

Die Erfindung betrifft eine Auswertevorrichtung zur fehlertoleranten Auswertung von mindestens vier redundanten Sensorsignalen für ein Motorsteuergerät einer Kraftfahrzeuglenkung nach dem Oberbegriff des Anspruchs 1, sowie eine Kraftfahrzeuglenkung nach dem Oberbegriff des Anspruchs 11.

Kraftfahrzeuglenkungen sind sicherheitskritische Systeme von deren Betriebs- und Ausfallsicherheit die körperliche Unversehrtheit der Fahrzeuginsassen unmittelbar abhängt. Ein plötzlicher Ausfall der Lenkung oder auch ein unerwartetes Lenkverhalten können zu Unfällen mit schweren Folgen für die Fahrzeuginsassen führen. Aus diesen Gründen sind hohe Anforderungen an die Sicherheit der verbauten Komponenten zu stellen. Dies gilt insbesondere für Kraftfahrzeuglenkungen, die als Steer-by-Wire-Lenksysteme ausgebildet sind.

In Steer-by-Wire-Lenksystemen für Kraftfahrzeuge besteht keine mechanische Verbindung mehr zwischen einem vom Fahrer bedienten Lenkrad und den gelenkten Rädern. Stattdessen wird die Stellung der gelenkten Räder durch einen elektronisch geregelten Lenksteller eingestellt, um das Fahrzeug auf der gewünschten Bahn zu führen. Zu diesem Zweck stellt ein mit der Lenkwelle verbundener Lenkwinkelsensor ein Sollstellungssignal bereit, das die Lenkabsicht des Fahrers repräsentiert. Der Lenksteller wird dann über einen Stellungsregler mit ausreichender Leistung und Bandbreite derart mit einem Drehmoment-Anforderungssignal angesteuert, dass die gelenkten Räder in die Sollstellung eingeregelt werden. Im Falle einer Fehlfunktion oder einem Ausfall des Lenksystems steht dem Fahrer keine mechanische Rückfallebene mehr zur Verfügung, um das Fahrzeug auf der gewünschten Bahn zu halten. Die verwendeten Bauteile und Sensoren sind deshalb fehlertolerant auszubilden, so dass auftretende Fehlfunktionen einzelner Bauteile zwar bemerkt werden, ein sicherer Weiterbetrieb aber dennoch möglich ist.

Die Anforderungen an die funktionale Sicherheit von sicherheitsrelevanten elektrischen/elektronischen Komponenten in Kraftfahrzeugen werden in ISO 26262 in vier Stufen ASIL A bis D (Automotive Safety Integrity Level) klassifiziert. Für Steer-by-Wire-Lenkungen oder auch autonom lenkende Fahrzeuge werden zunehmend Komponenten benötigt, die der höchsten Sicherheitsstufe ASIL D genügen.

Eine Auswertevorrichtung und eine Kraftfahrzeuglenkung nach dem Oberbegriff der Ansprüche 1 und 11 ist bekannt aus US 2019/0039643 A1. US 2019/0039643 A1 beschreibt eine Sensorvorrichtung mit mehreren Sensoreinheiten, von denen jede mehrere Sensorelemente und eine Signalverarbeitungseinheit enthält, die ein Ausgangssignal erzeugt und überträgt, das mehrere Erfassungssignale enthält, die Erfassungswerten der Sensorelemente entsprechen. Die Sensorvorrichtung enthält ferner mehrere Steuereinheiten. Die Steuereinheiten senden und empfangen gegenseitig die Erfassungssignale als eigene Sensorsignale von der jeweiligen Sensoreinheit und die Erfassungssignale als andere Sensorsignale, die von einer anderen der der Steuereinheiten empfangen wurden.

EP 0 525 574 A2 beschreibt ein System zur Ansteuerung sicherheitsrelevanter Systeme durch Signale, die in wenigstens zwei Rechnereinheiten bzw. Rechnerkanälen gebildet werden. Jede Rechnereinheit bzw. jeder Rechnerkanal wird durch eine Überwachungseinrichtung überwacht. Ansteuerungen von Stellgliedern werden nur dann getätigt, wenn die zugehörige Überwachungseinrichtung eine fehlerfreie Funktion der Rechnereinheit bzw. des Rechnerkanals feststellt.

Aus US 7 254 470 B2 ist ein Verfahren und eine Vorrichtung zur Erzeugung eines fehlertoleranten Sensorsignals für ein Motorsteuerungsgerät in einer Fahrzeuglenkung bekannt. Dabei werden mindestens drei Sensorsignale empfangen, die den zu überwachenden Parameter charakterisieren, daraus eine Mehrzahl an Parameter-Paarsignalen erzeugt und aus den Parameter-Paarsignalen eines ausgewählt, um daraus ein gemessenes Parametersignal zu erzeugen. Gemäß US 7 254 470 B2 ist vorgesehen, dass die Sensorsignale unterschiedlichen bekannten Charakteristiken genügen und daher bei voller Funktionalität in einem bekannten Verhältnis zueinanderstehen. Anhand von erzeugten Paarsignalen können Diagnosesignale erzeugt werden, die im Fehlerfall den Fehler anzeigen. Nachteilig ist, dass die bekannte Vorrichtung bei drei Sensorsignalen maximal einen Fehler tolerieren kann. Bei einer höheren Anzahl von Sensorsignalen steigt die Anzahl der zu erzeugenden Paarsignale und damit der Datenverarbeitungsaufwand stark an, wodurch die Reaktionsgeschwindigkeit der Vorrichtung ab- und/oder der erforderliche Bauraum zunimmt. Ein weiterer Nachteil ist, dass die Vorrichtung zwar gegenüber einem fehlerhaften Sensorsignal fehlertolerant ist, ein Fehler in dem die Sensorsignale auswertenden Controller aber nicht ausgeglichen werden kann.

Es ist daher die Aufgabe der vorliegenden Erfindung, eine Auswertevorrichtung zur fehlertoleranten Auswertung von mindestens vier redundanten Sensorsignalen für ein Motorsteuergerät einer Kraftfahrzeuglenkung anzugeben, durch die die Ausfall- und Betriebssicherheit der Kraftfahrzeuglenkung bei zugleich geringem Bauaufwand erhöht wird.

Diese Aufgabe wird gelöst durch eine Auswertevorrichtung mit den Merkmalen des Anspruchs 1 und eine Kraftfahrzeuglenkung mit den Merkmalen des Anspruchs 11.

Hierdurch wird eine Auswertevorrichtung zur fehlertoleranten Auswertung von mindestens vier redundanten Sensorsignalen für ein Motorsteuergerät einer Kraftfahrzeuglenkung geschaffen, die zwei redundant zueinander ausgebildete Steuereinheiten umfasst. Die Steuereinheiten weisen jeweils mindestens zwei Eingänge zur Aufnahme jeweils eines der redundanten Sensorsignale, einen Ausgang für die Ausgabe eines Ausgabesignals und eine Kommunikationsschnittstelle, die mit der Kommunikationsschnittstelle der jeweils anderen Steuereinheit für die Übertragung und den Empfang von jeweils einem Austauschsignal verbunden ist, sowie eine Logikschaltung auf. Die jeweilige Logikschaltung ist dazu ausgebildet, abhängig von Paarvergleichen zwischen den an den Eingängen und an der Kommunikationsschnittstelle empfangenen Signale aus diesen Signalen das Ausgabe- und das Austauschsignal auszuwählen und an den Ausgang und entsprechend an die Kommunikationsschnittstelle mittels Selektionsschaltungen durchzuschalten.

Auf diese Weise wird eine Auswertevorrichtung geschaffen, die eine redundante Auswertung der Sensorsignale sicherstellt, beruhend auf zwei vorzugsweise symmetrisch ausgebildeten, ausfallsicheren Steuereinheiten, die in wechselseitiger Kommunikation zueinanderstehen. Jede Steuereinheit stellt einen Datenauswertekanal bereit, der auf Basis mindestens zweier Eingangssignale und einem Austauschsignal ein Ausgabesignal bestimmt. Durch die Ausgabe zweier redundanter Ausgabesignale kann die Redundanz der Datenauswertekanäle bis zum Motorsteuergerät der Kraftfahrzeuglenkung weitergeführt werden, um die Lenkung mit einem durchgehend redundant ausgebildeten Steuersystem auszustatten. Dem Motorsteuergerät wird so ermöglicht, anhand der ausgegebenen Ausgabesignale die Funktionsfähigkeit der Auswertevorrichtung zu überprüfen. Eine Auswertevorrichtung mit dieser Struktur ermöglicht eine ASIL D kompatible Auswertung redundanter Sensorsignale bei gleichzeitig geringem Bauraum- und Komponentenbedarf.

Die redundanten Sensorsignale können bei funktionsfähigen Sensoren identisch ausgebildet sein. Es kann aber auch zur Erzielung einer diversitären Redundanz vorgesehen sein, dass die Sensorsignale unterschiedlich ausgebildet sind und beispielsweise auf unterschiedlichen Messprinzipien beruhen, jedoch den gleichen physikalischen Messwert repräsentieren. In diesem Fall kann in den Logikschaltungen eine Umrechnungseinheit vorgesehen sein, die geeignet ist, die Sensorsignale für die Paarvergleiche und die Ausgabe auf ein gemeinsames Format umzurechnen.

Vorzugsweise stammen die Sensorsignale von Drehmoment- und/oder Drehwinkelsensoren, die zur Aufnahme des Lenkzustands einer vom Fahrer des Kraftfahrzeugs betätigbaren Lenkhandhabe vorgesehen sind.

Die Kraftfahrzeuglenkung kann beispielsweise als Kraftfahrzeugservolenkung oder als Steer-by-Wire Lenksystem ausgebildet sein.

In einer bevorzugten Ausführungsform sind die Logikschaltungen dazu ausgebildet, eines der an den Eingängen der jeweiligen Steuereinheit empfangenen Sensorsignale als Ausgabesignal auszuwählen, das durch mindestens einen Paarvergleich bestätigt wurde. Dieser Ausbildung der Auswertevorrichtung liegt die Annahme zugrunde, dass die unmittelbar an die Eingänge übermittelten Sensorsignale mit einer höheren Zuverlässigkeit fehlerfrei sind, als das von der anderen Steuereinheit übermittelte Austauschsignal, das beispielsweise durch Übertragungsfehler oder einen Fehler der anderen Steuereinheit beeinträchtigt sein kann. Das Austauschsignal wird in dieser Ausführungsform somit nur zur Identifizierung des korrekten Eingangssignals verwendet, wenn die an den Eingängen der jeweiligen Steuereinheit anliegenden Sensorsignale voneinander abweichen.

Bevorzugt ist ferner vorgesehen, dass die Logikschaltungen dazu ausgebildet sind, ein erstes Fehlersignal an dem Ausgang der jeweiligen Steuereinheit auszugeben, wenn ausschließlich negative Paarvergleiche vorliegen. Durch die Ausgabe eines Fehlersignals kann dem nachfolgenden Motorsteuergerät signalisiert werden, dass ein Fehler in dem jeweiligen Datenverarbeitungskanal vorliegt. Das Fehlersignal kann auch ein konstanter Pegel, beispielsweise ein Nullsignal sein. Das Fehlersignal kann aber auch genutzt werden, um Diagnoseinformationen an das Motorsteuergerät weiterzugeben.

Gemäß einer weiteren bevorzugten Ausführungsform sind die Logikschaltungen dazu ausgebildet, eines der an den Eingängen der jeweiligen Steuereinheit empfangenen Sensorsignale als Austauschsignal auszuwählen, das im Paarvergleich mit einem an einem anderen Eingang der Steuereinheit empfangenen Sensorsignal oder als einziges der an den Eingängen der Steuereinheit empfangenen Sensorsignale in einem Paarvergleich mit dem über die Kommunikationsschnittstelle empfangenen Austauschsignal bestätigt wurde. Durch diese Ausbildung wird sichergestellt, dass ein Austauschsignal nur dann an die Kommunikationsschnittstelle ausgegeben wird, wenn sich eines der an den Eingängen empfangenen Signale mindestens einen Paarvergleich als zuverlässig erwiesen hat. Dabei werden Übereinstimmungen der an den Eingängen empfangenen Signale insoweit stärker gewichtet, als dass das empfangene Austauschsignal diese nicht in Zweifel ziehen kann. Liegt eine Übereinstimmung eines Eingangssignals mit dem empfangenen Austauschsignal vor, ist hingegen zusätzlich zu überprüfen, dass das Austauschsignal nicht auch mit einem weiteren Eingangssignal übereinstimmt, dessen Paarvergleich mit ersterem Eingangssignal negativ ist.

Erfindungsgemäß ist weiterhin vorgesehen, dass die Logikschaltungen dazu ausgebildet sind, ein zweites Fehlersignal an der Kommunikationsschnittstelle der jeweiligen Steuereinheit auszugeben, wenn ausschließlich negative Paarvergleiche zwischen den an den Eingängen der jeweiligen Steuereinheit empfangenen Sensorsignalen vorliegen und keines oder mehrere der an den Eingängen der jeweiligen Steuereinheit empfangenen Sensorsignale im Paarvergleich mit dem an der jeweiligen Kommunikationsschnittstelle empfangenen Austauschsignal bestätigt wurde. Die Ausgabe des zweiten Fehlersignals ist somit für den Fall vorteilhaft, wenn keines der Eingangssignale in seiner Zuverlässigkeit bestätigt werden kann und sich demnach nicht als Austauschsignal qualifiziert. Durch das Fehlersignal kann der zweiten Steuereinheit mitgeteilt werden, dass ein Fehler bei den Sensoren und/oder der Steuereinheit vorliegt. Sofern sich das zweite Fehlersignal von einem Nullsignal unterscheidet, kann die andere Steuereinheit eindeutig identifizieren, ob ein Fehler der Steuereinheit oder der Datenübertragung zwischen den Steuereinheiten vorliegt.

In einer weiteren bevorzugten Ausführungsform sind an den Eingängen und der Kommunikationsschnittstelle Fehlererkennungseinheiten angeordnet, die dazu ausgebildet sind, den Empfang von fehlerhaften Signalen an den Eingängen und der Kommunikationsschnittstelle zu blockieren. Die Fehlererkennungseinheiten sind dazu vorgesehen, die eingehenden Signale auf Plausibilität zu prüfen. Beispielsweise kann überprüft werden, ob die Signale ein vorbestimmtes Format aufweisen. Auf diese Weise können fehlerhafte Signale bereits vor der Verarbeitung aussortiert werden. Fehlerhafte Signale werden somit nicht empfangen und mit diesen Signalen regulär durchzuführende Paarvergleiche werden nicht durchgeführt, so dass solche Paarvergleiche für die Auswertung nicht vorliegen. Durch Verwerfen von fehlerhaften Signalen wird zum einen die Datenverarbeitung in der Auswertevorrichtung entlastet und zum anderen die Sicherheit erhöht, da systematische Störungen, die zu gleichen, aber fehlerhaften Signalen führen, frühzeitig erkannt werden.

Bevorzugt ist vorgesehen, dass die Logikschaltungen dazu ausgebildet sind, in dem Fall, dass nur ein einziges fehlerfreies Sensorsignal an einem Eingang der jeweiligen Steuereinheit vorliegt und der Empfang der übrigen Signale an den übrigen Eingängen und der Kommunikationsschnittstelle durch die Fehlererkennungseinheiten blockiert ist, das fehlerfreie Sensorsignal als Ausgabesignal auszuwählen. Auf diese Weise wird eine ungeprüfte Betriebsfähigkeit der Auswertevorrichtung auch für den Fall sichergestellt, dass mehrere Fehler in den Eingangssignalen und dem Austauschsignal vorliegen.

Weiterhin kann vorgesehen sein, dass die Logikschaltungen dazu ausgebildet sind, ein drittes Fehlersignal an dem Ausgang auszugeben, wenn der Empfang von Sensorsignalen an allen Eingängen der Steuereinheit von den Fehlererkennungseinheiten blockiert ist.

Die ersten, zweiten und dritten Fehlersignale können gleich oder unterschiedlich ausgebildet sein. Alle drei Fehlersignale können jeweils unabhängig von den anderen auch ein Nullsignal sein.

In einer besonders bevorzugten Ausführungsform ist die Auswertevorrichtung zur Auswertung von genau vier redundanten Sensorsignalen ausgebildet und die Steuereinheiten weisen jeweils genau zwei Eingänge für jeweils eines der redundanten Sensorsignale auf. Vier Sensoren bilden die minimale Anzahl von Sensoren, die erforderlich sind, um den erfindungsgemäßen Aufbau der Auswerteeinrichtung zu realisieren und den ASIL D Standard zu erfüllen. Zur Bauraum- und Kostenoptimierung ist ein Aufbau mit dieser minimalen Anzahl an Sensoren bevorzugt.

Zur Durchführung der Paarvergleiche umfassen die Steuereinheiten vorzugsweise Vergleicherschaltungen.

Gemäß einer bevorzugten Ausführungsform sind die Logikschaltungen dazu ausgebildet, zunächst Paarvergleiche zwischen den an den jeweiligen Eingängen empfangenen Sensorsignalen auszuwerten und das von der jeweils anderen Steuereinheit empfangene Austauschsignal nur dann zu berücksichtigen, falls keines der empfangenen Sensorsignale in einem Paarvergleich bestätigt wurde. Durch diese Ausbildung wird die Datenverarbeitung in der Auswertevorrichtung beschleunigt. Wenn fehlerfreie, übereinstimmende Sensorsignale an den Eingängen der jeweiligen Steuereinheit vorliegen, müssen weniger Paarvergleiche durchgeführt werden und es kommt zu keinem Zeitverzug durch die Datenübertragung zwischen den Steuereinheiten. In einer alternativen Ausführungsform kann auch vorgesehen sein, die Austauschsignale nur für eine Post-Diagnose heranzuziehen. Abhängig von der erforderlichen Abtastfrequenz der Sensorsignale und der Verzögerungszeit der Datenübertragung kann dies vorteilhaft sein. Sofern technisch umsetzbar ist eine Echtzeit-Berücksichtigung der Austauschsignale aber bevorzugt.

Die Aufgabe wird ferner gelöst durch eine Kraftfahrzeuglenkung umfassend mindestens vier redundante Sensoren zur Erfassung von Lenkungsparametern und mindestens einen Elektromotor mit einer Motorsteuerung zur Bereitstellung einer von den Lenkungsparametern abhängigen Lenkkraft für gelenkte Räder, wobei die Kraftfahrzeuglenkung ferner eine zuvor beschriebene erfindungsgemäße Auswertevorrichtung umfasst, deren Eingänge mit den Sensoren und deren Ausgänge mit der Motorsteuerung verbunden sind.

Die Sensoren zur Erfassung von Lenkungsparametern können beispielsweise Lenkwinkelsensoren, Lenkmomentsensoren, Rotorpositionssensoren des Elektromotors oder Kraftfahrzeuggeschwindigkeitssensoren sein.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

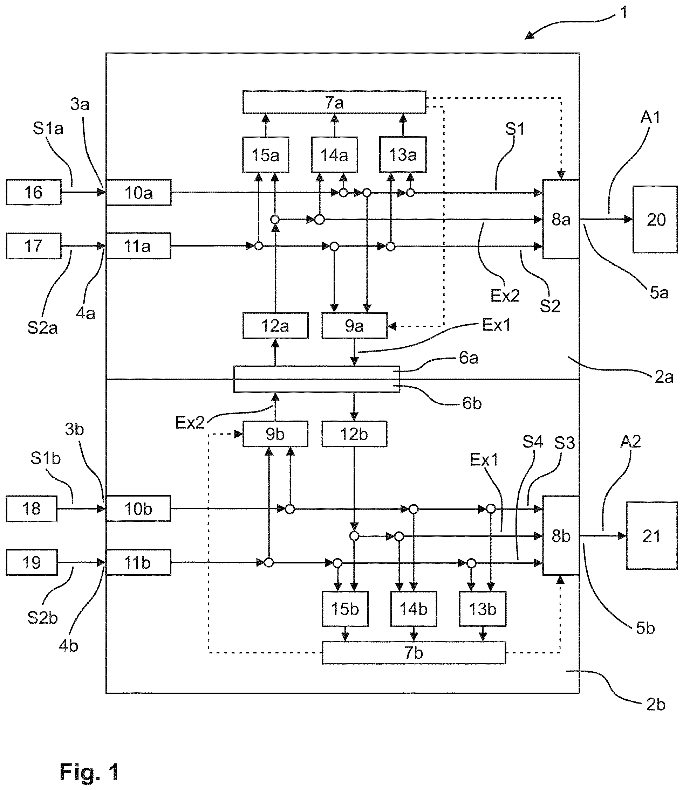

- Fig. 1: zeigt schematisch ein Ausführungsbeispiel der erfindungsgemäßen Auswertevorrichtung.

In Fig. 1 ist schematisch der Aufbau einer erfindungsgemäßen Auswertevorrichtung 1 gezeigt. Die Auswertevorrichtung 1 ist zur fehlertoleranten Auswertung von mindestens vier redundanten Sensorsignalen S1a, S2a, S1b, S2b für ein Motorsteuergerät einer Kraftfahrzeuglenkung vorgesehen. Die Auswerteeinrichtung 1 umfasst zwei redundant zueinander ausgebildete Steuereinheiten 2a, 2b, die jeweils mindestens zwei Eingänge 3a, 4a; 3b, 4b zur Aufnahme jeweils eines der redundanten Sensorsignale S1a, S2a, S1b, S2b aufweisen. Die Sensorsignale S1a, S2a, S1b, S2b werden von redundanten Sensoren 16, 17, 18 19 bereitgestellt, die an die Eingänge 3a, 4a; 3b, 4b angeschlossen sind. Die Steuereinheiten 2a, 2b umfassen ferner jeweils einen Ausgang 5a, 5b für die Ausgabe eines Ausgabesignals A1, A2 und eine Kommunikationsschnittstelle 6a, 6b, die mit der Kommunikationsschnittstelle 6b, 6a der jeweils anderen Steuereinheit 2b, 2a für die Übertragung und den Empfang von jeweils einem Austauschsignal Ex1, Ex2 verbunden ist. Außerdem weisen die Steuereinheiten 2a, 2b jeweils eine Logikschaltung 7a, 7b auf, die dazu ausgebildet ist, abhängig von Paarvergleichen zwischen den an den Eingängen 3a, 4a; 3b, 4b und an der Kommunikationsschnittstelle 6a, 6b empfangenen Signale S1a, S2a, Ex2; S1b, S2b, Ex1 aus diesen Signalen S1a, S2a, Ex2; S1b, S2b, Ex1 das Ausgabe- A1, A2 und das Austauschsignal Ex1, Ex2 auszuwählen und an den Ausgang 5a, 5b und entsprechend an die Kommunikationsschnittstelle 6a, 6b mittels Selektionsschaltungen 8a, 9a; 8b, 9b der Auswertevorrichtung 1 durchzuschalten.

Die dargestellte Auswertevorrichtung 1 kann Teil einer Kraftfahrzeuglenkung sein, die die vier redundanten Sensoren 16, 17, 18, 19 zur Erfassung von Lenkungsparametern und mindestens einen Elektromotor mit einer Motorsteuerung zur Bereitstellung einer von den Lenkungsparametern abhängigen Lenkkraft für gelenkte Räder umfasst. Die Sensoren 16, 17, 18, 19 zur Erfassung von Lenkungsparametern können beispielsweise Lenkwinkelsensoren, Lenkmomentsensoren, Rotorpositionssensoren des Elektromotors oder Kraftfahrzeuggeschwindigkeitssensoren sein. Die Kraftfahrzeuglenkung umfasst dabei ferner die Auswertevorrichtung 1, deren Eingänge 3a, 4a, 3b, 4b mit den Sensoren 16, 17, 18, 19 und deren Ausgänge 5a, 5b mit der Motorsteuerung verbunden sind. Die Blöcke 20, 21 in Fig. 1 stellen Nutzanwendungen für die ausgewerteten Sensorsignale innerhalb der Motorsteuerung dar.

Die Auswertevorrichtung 1 gemäß Fig. 1 ist zur Auswertung von genau vier redundanten Sensorsignalen S1a, S2a, S1b, S2b ausgebildet und die Steuereinheiten 2a, 2b weisen jeweils genau zwei Eingänge 3a, 4a; 3b, 4b für jeweils eines der redundanten Sensorsignale S1a, S2a, S1b, S2b auf. Es sind jedoch alternative Ausführungsbeispiele denkbar und möglich, in denen die Steuereinheiten mehr als zwei Eingänge für redundante Sensorsignale aufweisen. Dabei können die Steuereinheiten gleich viele oder eine unterschiedliche Anzahl von Eingängen aufweisen.

Gemäß dem Ausführungsbeispiel in Fig. 1 umfassen die Steuereinheiten 2a, 2b zur Durchführung der Paarvergleiche Vergleicherschaltungen 13a, 14a, 15a; 13b, 14b, 15b umfassen. Die Vergleicherschaltungen 13a, 14a, 15a; 13b, 14b, 15b können in die Logikschaltungen 7a, 7b integriert oder separat davon ausgebildet sein.

Für die Ausbildung der Logikschaltungen wird Bezug genommen auf die der Beschreibung als Anlage beigefügte Funktionstabelle (Tabelle 1). In Tabelle 1 ist eine Bestätigung im Paarvergleich durch "ok" gekennzeichnet. Ein negativer Paarvergleich oder ein fehlerhaftes und blockiertes Signal durch den Eintrag "nok". Nicht vorliegende Paarvergleiche sind durch "N/A" gekennzeichnet.

Wie den Spalten "Vergleicherschaltung" und "Ausgabesignal" der Funktionstabelle zu entnehmen ist, sind die Logikschaltungen 7a, 7b dazu ausgebildet, eines der an den Eingängen 3a, 4a; 3b,4b der jeweiligen Steuereinheit 2a, 2b empfangenen Sensorsignale S1a, S2a, S1b, S2b als Ausgabesignal A1, A2 auszuwählen, das durch mindestens einen Paarvergleich bestätigt wurde. Die Logikschaltungen 7a, 7b geben dagegen ein erstes Fehlersignal F1 an dem Ausgang 5a, 5b der jeweiligen Steuereinheit 2a, 2b aus, wenn ausschließlich negative Paarvergleiche vorliegen.

Den Spalten "Vergleicherschaltung" und "Austauschsignal" ist weiterhin zu entnehmen, dass die Logikschaltungen 7a, 7b dazu ausgebildet sind, eines der an den Eingängen 3a, 4a; 3b, 4b der jeweiligen Steuereinheit 2a, 2b empfangenen Sensorsignale S1a, S2a; S1b, S2b als Austauschsignal Ex1; Ex2 auszuwählen, das im Paarvergleich mit einem an einem anderen Eingang 4a, 3a; 4b, 3b der Steuereinheit empfangenen Sensorsignal S2a, S1a; S2b, S1b oder als einziges der an den Eingängen 3a, 4a; 3b, 4b der Steuereinheit 2a, 2b empfangenen Sensorsignale S1a, S2a; S1b, S2b in einem Paarvergleich mit dem über die Kommunikationsschnittstelle 6a, 6b empfangenen Austauschsignal Ex2, Ex1 bestätigt wurde.

Die Logikschaltungen 7a, 7b geben dagegen ein zweites Fehlersignal F2 an der Kommunikationsschnittstelle 6a, 6b der jeweiligen Steuereinheit 2a, 2b aus, wenn ausschließlich negative Paarvergleiche zwischen den an den Eingängen 3a, 4a; 3b, 4b der jeweiligen Steuereinheit 2a, 2b empfangenen Sensorsignalen S1a, S2a; S1b, S2b vorliegen und keines oder mehrere der an den Eingängen 3a, 4a; 3b, 4b der jeweiligen Steuereinheit 2a, 2b empfangenen Sensorsignale S1a, S2a; S1b, S2b im Paarvergleich mit dem an der jeweiligen Kommunikationsschnittstelle 6a, 6b empfangenen Austauschsignal Ex2, Ex1 bestätigt wurde.

Wie in Fig. 1 dargestellt können an den Eingängen 3a, 4a; 3b, 4b und der Kommunikationsschnittstelle 6a, 6b Fehlererkennungseinheiten 10a, 11a, 12a; 10b, 11b, 12b angeordnet sein, die dazu ausgebildet sind den Empfang von fehlerhaften Signalen S1a, S2a, Ex2; S1b, S2b, Ex1 an den Eingängen 3a, 4a; 3b, 4b und der Kommunikationsschnittstelle 6a, 6b zu blockieren.

Die Funktionsweise der Fehlererkennungseinheiten 10a, 11a, 12a; 10b, 11b, 12b im Zusammenspiel mit den Vergleicherschaltungen 13a, 14a, 15a; 13b, 14b, 15b kann ebenfalls der Funktionstabelle im Anhang der Beschreibung entnommen werden. Sofern keine Fehlererkennungseinheiten 10a, 11a, 12a; 10b, 11b, 12b vorgesehen sind, entspricht die Funktion der Logikschaltungen 7a, 7b den ersten 8 Zeilen von Tabelle 1. Soweit einzelne Fehlererkennungseinheiten 10a, 11a, 12a; 10b, 11b, 12b vorgesehen sind, ergibt sich die Funktion jeweils unter Ausblendung derjenigen Zeilen, die eine Blockierung ("nok") Signals in einem Signalweg ohne Fehlererkennungseinheit vorsehen.

Weiterhin ist der Funktionstabelle zu entnehmen, dass die Logikschaltungen 7a, 7b dazu ausgebildet sind, in dem Fall (Fall Nr. 13 und 16), dass nur ein einziges fehlerfreies Sensorsignal S1a, S2a; S1b, S2b an einem Eingang 3a, 4a; 3b, 4b der jeweiligen Steuereinheit 2a, 2b vorliegt und der Empfang der übrigen Signale S1a, S2a, Ex2; S1b, S2b, Ex1 an den übrigen Eingängen 3a, 4a; 3b, 4b und der Kommunikationsschnittstelle 6a, 6b durch die Fehlererkennungseinheiten 10a, 11a, 12a; 10b, 11b, 12b blockiert ist, das fehlerfreie Sensorsignal S1a, S2a; S1b, S2b als Ausgabesignal A1, A2 auszuwählen. Dieses Signal ist ungeprüft und wird daher als Ersatzwert bezeichnet. Auf diese Weise kann die Funktionsfähigkeit der Auswertevorrichtung auch dann sichergestellt werden, wenn die Redundanz durch mehrere unterschiedliche Fehler aufgehoben wurde.

An dem Ausgang 5a, 5b wird hingegen dann ein drittes Fehlersignal F3 durch die Logikschaltungen 7a, 7b ausgegeben, wenn der Empfang von Sensorsignalen an allen Eingängen 3a, 4a; 3b, 4b der Steuereinheit 2a; 2b von den Fehlererkennungseinheiten 10a, 11a; 10b, 11b blockiert ist.

Vorzugsweise werten die Logikschaltungen 7a, 7b zunächst Paarvergleiche zwischen den an den jeweiligen Eingängen 3a, 4a; 3b, 4b empfangenen Sensorsignalen S1a, S2a; S1b, S2b aus und berücksichtigen das von der jeweils anderen Steuereinheit 2b; 2a empfangene Austauschsignal Ex2, Ex1 nur dann, falls keines der empfangenen Sensorsignale S1a, S2a; S1b, S2b in einem Paarvergleich bestätigt wurde.

Wie der vorletzten Spalte von Tabelle 1 zu entnehmen ist, kann die Betriebsbereitschaft der Auswertevorrichtung in der überwiegenden Mehrzahl der Fälle aufrechterhalten werden. Erst bei mehreren nicht miteinander in Einklang zu bringenden Fehlern kann kein Ausgabesignal mehr am Ausgang der jeweiligen Steuereinheit bereitgestellt werden. In Regelfall wird aber die zweite, unabhängige Steuereinheit in diesen Fehlerfällen noch ein gültiges Sensorsignal ausgeben.

Die letzte Spalte von Tabelle 1 zeigt Fehlerhypothesen, die den von der jeweiligen Logikschaltung angenommenen Fehlerzustand beinhalten. Der von den Logikschaltungen ermittelte Fehlerzustand kann über die jeweiligen Fehlersignale F1, F2, F3 oder über einen separaten Diagnoseausgang der Auswertevorrichtung ausgegeben werden.

### Bezugszeichenliste

- 1: Auswertevorrichtung
- 2a, 2b: Steuereinheit
- 3a, 3b: Eingang
- 4a, 4b: Eingang
- 5a, 5b: Ausgang
- 6a, 6b: Kommunikationsschnittstelle
- 7a, 7b: Logikschaltung
- 8a, 8b: Selektionsschaltung
- 9a, 9b: Selektionsschaltung
- 10a, 10b: Fehlererkennungseinheit
- 11a, 11b: Fehlererkennungseinheit
- 12a, 12b: Fehlererkennungseinheit
- 13a, 13b: Vergleicherschaltung
- 14a, 14b: Vergleicherschaltung
- 15a, 15b: Vergleicherschaltung
- 16: Sensor
- 17: Sensor
- 18: Sensor
- 19: Sensor
- 20: Nutzanwendung
- 21: Nutzanwendung

- S1a, S1b: Sensorsignale
- S2a, S2b: Sensorsignale
- A1, A2: Ausgabesignale
- Ex1, Ex2: Austauschsignale
- F1, F2, F3: Fehlersignale

### Anhang:

**Tabelle 1**

| Fall Nr. | Fehlererkennungseinheit | | | Vergleicherschaltung | | | Ausgabesignal A1/A2 | Austauschsignal Ex1/Ex2 | Dienstgüte | Fehlerhypothese |
|---|---|---|---|---|---|---|---|---|---|---|
| | 10 a/b | 11 a/b | 12 a/b | 13 a/b \| | 14 a/b | 15 a/b | | | | |
| 1 | ok | ok | ok | ok | ok | ok | Sla/b | Sla/b | betriebsbereit, fehlertolerant | Alles OK |
| 2 | ok | ok | ok | ok | ok | nok | Sla/b | Sla/b | betriebsbereit, Störung vorhanden | Störung der anderen Steuereinheit oder der Kommunikation |
| 3 | ok | ok | ok | ok | nok | ok | Sla/b | Sla/b | betriebsbereit, Störung vorhanden | Störung der anderen Steuereinheit oder der Kommunikation |
| 4 | ok | ok | ok | ok | nok | nok | Sla/b | Sla/b | betriebsbereit, Störung vorhanden | Störung der anderen Steuereinheit oder der Kommunikation |
| 5 | ok | ok | ok | nok | ok | ok | Sla/b | F2 | betriebsbereit, Störung vorhanden | Übergangszustand, Verschieben der Entscheidung bis stabiler Zustand erreicht |
| 6 | ok | ok | ok | nok | ok | nok | Sla/b | Sla/b | betriebsbereit, Störung vorhanden | Signal S2a/b fehlerhaft |
| 7 | ok | ok | ok | nok | nok | ok | S2a/b | S2a/b | oetriebsbereit, Störung vorhanden | Signal Sla/b fehlerhaft |
| 8 | ok | ok | ok | nok | nok | nok | F1 | F2 | Fehler | Paradoxer Zustand |
| 9 | ok | ok | nok | ok | N/A | N/A | Sla/b | Sla/b | betriebsbereit, Störung vorhanden | Störung der anderen Steuereinheit oder der Kommunikation |
| 10 | ok | ok | nok | nok | N/A | N/A | F1 | F2 | Fehler | Signal Sla/b oder S2a/b fehlerhaft |
| 11 | ok | nok | ok | N/A | ok | N/A | Sla/b | Sla/b | betriebsbereit, Störung vorhanden | Signal S2a/b fehlerhaft |
| 12 | ok | nok | ok | N/A | nok | N/A | F1 | F2 | Fehler | Signal S2a/b fehlerhaft, Signal Sla/b ist auffällig und kann nicht geprüft werden |
| 13 | ok | nok | nok | N/A | N/A | N/A | Sla/b | F2 | Ersatzwert | Signal S2a/b fehlerhaft und Störung der anderen Steuereinheit oder der Kommunikation |
| 14 | nok | ok | ok | N/A | N/A | ok | S2a/b | S2a/b | betriebsbereit, Störung vorhanden | Signal Sla/b fehlerhaft |
| 15 | nok | ok | ok | N/A | N/A | nok | F1 | F2 | Fehler | Signal Sla/b fehlerhaft, Signal S2a/b ist auffällig und kann nicht geprüft werden |
| 16 | nok | ok | nok | N/A | N/A | N/A | S2a/b | F2 | Ersatzwert | Signal Sla/b fehlerhaft und Störung der anderen Steuereinheit oder der Kommunikation |
| 17 | nok | nok | ok | N/A | N/A | N/A | F3 | F2 | Fehler | Signal Sla/b und S2a/b fehlerhaft |
| 18 | nok | nok | nok | N/A | N/A | N/A | F3 | F2 | Fehler | Kein verwendbares Signal |

## Patentansprüche

1. Auswertevorrichtung zur fehlertoleranten Auswertung von mindestens vier redundanten Sensorsignalen (S1a, S2a, S1b, S2b) für ein Motorsteuergerät einer Kraftfahrzeuglenkung, umfassend zwei redundant zueinander ausgebildete Steuereinheiten (2a, 2b), die jeweils mindestens zwei Eingänge (3a, 4a; 3b, 4b) zur Aufnahme jeweils eines der redundanten Sensorsignale (S1a, S2a, S1b, S2b), einen Ausgang (5a, 5b) für die Ausgabe eines Ausgabesignals (A1, A2) und eine Kommunikationsschnittstelle (6a, 6b), die mit der Kommunikationsschnittstelle (6b, 6a) der jeweils anderen Steuereinheit (2b, 2a) für die Übertragung und den Empfang von jeweils einem Austauschsignal (Ex1, Ex2) verbunden ist, sowie eine Logikschaltung (7a, 7b) aufweisen, die dazu ausgebildet ist, abhängig von Paarvergleichen zwischen den an den Eingängen (3a, 4a; 3b, 4b) und an der Kommunikationsschnittstelle (6a, 6b) empfangenen Signale (S1a, S2a, Ex2; S1b, S2b, Ex1) aus diesen Signalen (S1a, S2a, Ex2; S1b, S2b, Ex1) das Ausgabesignal (A1, A2) auszuwählen und an den Ausgang (5a, 5b) mittels Selektionsschaltungen (8a, 9a; 8b, 9b) durchzuschalten **dadurch gekennzeichnet, dass** die Logikschaltungen (7a, 7b) dazu ausgebildet sind, abhängig von Paarvergleichen zwischen den an den Eingängen (3a, 4a; 3b, 4b) und an der Kommunikationsschnittstelle (6a, 6b) empfangenen Signale (S1a, S2a, Ex2; S1b, S2b, Ex1) aus diesen Signalen (S1a, S2a, Ex2; S1b, S2b, Ex1) das Austauschsignal (Ex1, Ex2) auszuwählen und an die Kommunikationsschnittstelle (6a, 6b) mittels der Selektionsschaltungen (8a, 9a; 8b, 9b) durchzuschalten und dazu ausgebildet sind, ein zweites Fehlersignal (F2) an der Kommunikationsschnittstelle (6a, 6b) der jeweiligen Steuereinheit (2a, 2b) auszugeben, wenn ausschließlich negative Paarvergleiche zwischen den an den Eingängen (3a, 4a; 3b, 4b) der jeweiligen Steuereinheit (2a, 2b) empfangenen Sensorsignalen (S1a, S2a; S1b, S2b) vorliegen und keines oder mehrere der an den Eingängen (3a, 4a; 3b, 4b) der jeweiligen Steuereinheit (2a, 2b) empfangenen Sensorsignale (S1a, S2a; S1b, S2b) im Paarvergleich mit dem an der jeweiligen Kommunikationsschnittstelle (6a, 6b) empfangenen Austauschsignal (Ex2, Ex1) bestätigt wurde.

2. Auswertevorrichtung nach Anspruch 1, **dadurch gekennzeichnet, dass** die Logikschaltungen (7a, 7b) dazu ausgebildet sind, eines der an den Eingängen (3a, 4a; 3b, 4b) der jeweiligen Steuereinheit (2a, 2b) empfangenen Sensorsignale (S1a, S2a, S1b, S2b) als Ausgabesignal (A1, A2) auszuwählen, das durch mindestens einen Paarvergleich bestätigt wurde.

3. Auswertevorrichtung nach Anspruch 1 oder 2, **dadurch gekennzeichnet, dass** die Logikschaltungen (7a, 7b) dazu ausgebildet sind, ein erstes Fehlersignal (F1) an dem Ausgang (5a, 5b) der jeweiligen Steuereinheit (2a, 2b) auszugeben, wenn ausschließlich negative Paarvergleiche vorliegen.

4. Auswertevorrichtung nach einem der Ansprüche 1 bis 3, **dadurch gekennzeichnet, dass** die Logikschaltungen (7a, 7b) dazu ausgebildet sind, eines der an den Eingängen (3a, 4a; 3b, 4b) der jeweiligen Steuereinheit (2a, 2b) empfangenen Sensorsignale (S1a, S2a; S1b, S2b) als Austauschsignal (Ex1; Ex2) auszuwählen, das im Paarvergleich mit einem an einem anderen Eingang (4a, 3a; 4b, 3b) der Steuereinheit empfangenen Sensorsignal (S2a, S1a; S2b, S1b) oder als einziges der an den Eingängen (3a, 4a; 3b, 4b) der Steuereinheit (2a, 2b) empfangenen Sensorsignale (S1a, S2a; S1b, S2b) in einem Paarvergleich mit dem über die Kommunikationsschnittstelle (6a, 6b) empfangenen Austauschsignal (Ex2, Ex1) bestätigt wurde.

5. Auswertevorrichtung nach einem der Ansprüche 1 bis 4, **dadurch gekennzeichnet, dass** an den Eingängen (3a, 4a; 3b, 4b) und der Kommunikationsschnittstelle (6a, 6b) Fehlererkennungseinheiten (10a, 11a, 12a; 10b, 11b, 12b) angeordnet sind, die dazu ausgebildet sind, den Empfang von fehlerhaften Signalen (S1a, S2a, Ex2; S1b, S2b, Ex1) an den Eingängen (3a, 4a; 3b, 4b) und der Kommunikationsschnittstelle (6a, 6b) zu blockieren.

6. Auswertevorrichtung nach Anspruch 5, **dadurch gekennzeichnet, dass** die Logikschaltungen (7a, 7b) dazu ausgebildet sind, in dem Fall, dass nur ein einziges fehlerfreies Sensorsignal (S1a, S2a; S1b, S2b) an einem Eingang (3a, 4a; 3b, 4b) der jeweiligen Steuereinheit (2a, 2b) vorliegt und der Empfang der übrigen Signale (S1a, S2a, Ex2; S1b, S2b, Ex1) an den übrigen Eingängen (3a, 4a; 3b, 4b) und der Kommunikationsschnittstelle (6a, 6b) durch die Fehlererkennungseinheiten (10a, 11a, 12a; 10b, 11b, 12b) blockiert ist, das fehlerfreie Sensorsignal (S1a, S2a; S1b, S2b) als Ausgabesignal (A1, A2) auszuwählen.

7. Auswertevorrichtung nach Anspruch 5 oder 6, **dadurch gekennzeichnet, dass** die Logikschaltungen (7a, 7b) dazu ausgebildet sind, ein drittes Fehlersignal (F3) an dem Ausgang (5a, 5b) auszugeben, wenn der Empfang von Sensorsignalen an allen Eingängen (3a, 4a; 3b, 4b) der Steuereinheit (2a; 2b) von den Fehlererkennungseinheiten (10a, 11a; 10b, 11b) blockiert ist.

8. Auswertevorrichtung nach einem der Ansprüche 1 bis 7, **dadurch gekennzeichnet, dass** die Auswertevorrichtung (1) zur Auswertung von genau vier redundanten Sensorsignalen (S1a, S2a, S1b, S2b) ausgebildet ist und die Steuereinheiten (2a, 2b) jeweils genau zwei Eingänge (3a, 4a; 3b, 4b) für jeweils eines der redundanten Sensorsignale (S1a, S2a, S1b, S2b) aufweisen.

9. Auswertevorrichtung nach einem der Ansprüche 1 bis 8, **dadurch gekennzeichnet, dass** die Steuereinheiten (2a, 2b) zur Durchführung der Paarvergleiche Vergleicherschaltungen (13a, 14a, 15a; 13b, 14b, 15b) umfassen.

10. Auswertevorrichtung nach einem der Ansprüche 1 bis 9, **dadurch gekennzeichnet, dass** die Logikschaltungen (7a, 7b) dazu ausgebildet sind, zunächst Paarvergleiche zwischen den an den jeweiligen Eingängen (3a, 4a; 3b, 4b) empfangenen Sensorsignalen (S1a, S2a; S1b, S2b) auszuwerten und das von der jeweils anderen Steuereinheit (2b; 2a) empfangene Austauschsignal (Ex2, Ex1) nur dann zu berücksichtigen, falls keines der empfangenen Sensorsignale (S1a, S2a; S1b, S2b) in einem Paarvergleich bestätigt wurde.

11. Kraftfahrzeuglenkung umfassend mindestens vier redundante Sensoren (16, 17, 18, 19) zur Erfassung von Lenkungsparametern und mindestens einen Elektromotor mit einer Motorsteuerung zur Bereitstellung einer von den Lenkungsparametern abhängigen Lenkkraft für gelenkte Räder, **dadurch gekennzeichnet, dass** die Kraftfahrzeuglenkung ferner eine Auswertevorrichtung (1) nach einem der Ansprüche 1 bis 10 umfasst, deren Eingänge (3a, 4a, 3b, 4b) mit den Sensoren (16, 17, 18, 19) und deren Ausgänge (5a, 5b) mit der Motorsteuerung verbunden sind.

12. Kraftfahrzeuglenkung nach Anspruch 11, **dadurch gekennzeichnet, dass** die Sensoren (16, 17, 18, 19) zur Erfassung von Lenkungsparametern Lenkwinkelsensoren, Lenkmomentsensoren, Rotorpositionssensoren des Elektromotors oder Kraftfahrzeuggeschwindigkeitssensoren sind.

## Claims

1. Evaluation device for the fault-tolerant evaluation of at least four redundant sensor signals (S1a, S2a, S1b, S2b) for a motor control unit of a motor vehicle steering system, comprising two control units (2a, 2b) which are designed redundantly to one another and which each have at least two inputs (3a, 4a; 3b, 4b) for receiving in each case one of the redundant sensor signals (S1a, S2a, S1b, S2b), an output (5a, 5b) for outputting an output signal (A1, A2) and a communication interface (6a, 6b), which is connected to the communication interface (6b, 6a) of the other control unit (2b, 2a) for the transmission and reception of a respective exchange signal (Ex1, Ex2), and a logic circuit (7a, 7b) which is designed, depending on pair comparisons between the signals (S1a, S2a, Ex2; S1b, S2b, Ex1) received at the inputs (3a, 4a; 3b, 4b) and at the communication interface (6a, 6b), to select the output signal (A1, A2) from these signals (S1a, S2a, Ex2; S1b, S2b, Ex1) and to switch it through to the output (5a, 5b) by means of selection circuits (8a, 9a; 8b, 9b), **characterised in that in that** the logic circuits (7a, 7b) are designed to, depending on pair comparisons between the signals (S1a, S2a, Ex2; S1b, S2b, Ex1) received at the inputs (3a, 4a; 3b, 4b) and at the communication interface (6a, 6b), to select the exchange signal (Ex1, Ex2) from these signals (S1a, S2a, Ex2; S1b, S2b, Ex1) and to switch it through to the communication interface (6a, 6b) by means of the selection circuits (8a, 9a; 8b, 9b) and which logic circuits (7a, 7b) are designed to output a second error signal (F2) at the communication interface (6a, 6b) of the respective control unit (2a, 2b) if only negative pair comparisons between the sensor signals (S1a, S2a; S1b, S2b) received at the inputs (3a, 4a; 3b, 4b) of the respective control unit (2a, 2b) are present and none or multiple of the sensor signals (S1a, S2a; S1b, S2b) received at the inputs (3a, 4a; 3b, 4b) of the respective control unit (2a, 2b) have been confirmed in the pair comparisons with the exchange signal (Ex2, Ex1) received at the respective communication interface (6a, 6b).

2. Evaluation device according to claim 1, **characterised in that** the logic circuits (7a, 7b) are designed to select one of the sensor signals (S1a, S2a, S1b, S2b) received at the inputs (3a, 4a; 3b, 4b) of the respective control unit (2a, 2b) as the output signal (A1, A2) which has been confirmed by at least one pair comparison.

3. Evaluation device according to claim 1 or 2, **characterised in that** the logic circuits (7a, 7b) are designed to output a first error signal (F1) at the output (5a, 5b) of the respective control unit (2a, 2b) if only negative pair comparisons are present.

4. Evaluation device according to one of claims 1 to 3, **characterised in that** the logic circuits (7a, 7b) are designed to select one of the sensor signals (S1a, S2a; S1b, S2b) received at the inputs (3a, 4a; 3b, 4b) of the respective control unit (2a, 2b) as exchange signal (Ex1; Ex2) which has been confirmed in a pair comparison with a sensor signal (S2a, S1a; S2b, S1b) received at another input (4a, 3a; 4b, 3b) of the control unit or as the only one of the sensor signals (S1a, S2a; S1b, S2b) received at the inputs (3 a, 4a; 3b, 4b) of the control unit (2a, 2b) in a pair comparison with the exchange signal (Ex2, Ex1) received via the communication interface (6a, 6b).

5. Evaluation device according to one of claims 1 to 4, **characterised in that** error detection units (10a, 11a, 12a; 10b, 11b, 12b) are arranged at the inputs (3a, 4a; 3b, 4b) and at the communication interface (6a, 6b), which error detection units (10a, 11a, 12a; 10b, 11b, , 12b) are designed to block the reception of faulty signals (S1a, S2a, Ex2; S1b, S2b, Ex1) at the inputs (3a, 4a; 3b, 4b) and at the communication interface (6a, 6b).

6. Evaluation device according to claim 5, **characterised in that** the logic circuits (7a, 7b) are designed to select the error-free sensor signal (S1a, S2a; S1b, S2b) as the output signal (A1, A2), in case that only a single error-free sensor signal (S1a, S2a; S1b, S2b) is present at an input (3a, 4a; 3b, 4 b) of the respective control unit (2a, 2b) and the reception of the remaining signals (S1a, S2a, Ex2; S1b, S2b, Ex1) at the remaining inputs (3a, 4a; 3b, 4b) and at the communication interface (6a, 6b) is blocked by the error detection units (10a, 11a, 12a; 10b, 11b, 12b).

7. Evaluation device according to claim 5 or 6, **characterised in that** the logic circuits (7a, 7b) are designed to output a third error signal (F3) at the output (5a, 5b) if the reception of sensor signals at all inputs (3a, 4a; 3b, 4b) of the control unit (2a; 2b) is blocked by the error detection units (10a, 11a; 10b, 11b).

8. Evaluation device according to one of claims 1 to 7, **characterised in that** the evaluation device (1) is designed to evaluate exactly four redundant sensor signals (S1a, S2a, S1b, S2b) and the control units (2a, 2b) each have exactly two inputs (3a, 4a; 3b, 4b) for in each case one of the redundant sensor signals (S1a, S2a, S1b, S2b).

9. Evaluation device according to one of the claims 1 to 8, **characterised in that** the control units (2a, 2b) comprise comparator circuits (13a, 14a, 15a; 13b, 14b, 15b) for carrying out the pair comparisons.

10. Evaluation device according to one of the claims 1 to 9, **characterised in that** the logic circuits (7a, 7b) are designed to initially evaluate pair comparisons between the sensor signals (S1a, S2a; S1b, S2b) and to take into account the exchange signal (Ex2, Ex1) received from the other control unit (2b; 2a) only if none of the received sensor signals (S1a, S2a; S1b, S2b) was confirmed in a pair comparison.

11. A motor vehicle steering system comprising at least four redundant sensors (16, 17, 18, 19) for detecting steering parameters and at least one electric motor with a motor control for providing a steering force for steered wheels dependent on the steering parameters, **characterised in that** the motor vehicle steering system further comprises an evaluation device (1) according to one of claims 1 to 10, the inputs (3a, 4a, 3b, 4b) of which are connected to the sensors (16, 17, 18, 19) and the outputs (5a, 5b) of which are connected to the motor control.

12. The motor vehicle steering system according to claim 11, **characterised in that** the sensors (16, 17, 18, 19) for detecting steering parameters are steering angle sensors, steering torque sensors, rotor position sensors of the electric motor or motor vehicle speed sensors.

## Revendications

1. Dispositif d'évaluation pour l'évaluation tolérante aux défauts d'au moins quatre signaux de capteur redondants (S1a, S2a, S1b, S2b) pour un appareil de commande de moteur d'une direction de véhicule automobile, comprenant deux unités de commande (2a, 2b) conçues de manière redondante l'une par rapport à l'autre, qui ont chacune au moins deux entrées (3a, 4a ; 3b, 4b) pour recevoir respectivement l'un des signaux de capteur redondants (S1a, S2a, S1b, S2b), une sortie (5a, 5b) pour la sortie d'un signal de sortie (A1, A2) et une interface de communication (6a, 6b) qui est reliée à l'interface de communication (6b, 6a) de l'autre unité de commande (2b, 2a) pour l'émission et la réception d'un signal d'échange (Ex1, Ex2), ainsi qu'un circuit logique (7a, 7b) qui est conçu, en fonction de comparaisons par paires entre les signaux d'échange présents sur les entrées (3a, 4a ; 3b, 4b) et à l'interface de communication (6a, 6b), pour sélectionner parmi ces signaux (S1a, S2a, Ex2 ; S1b, S2b, Ex1) le signal de sortie (A1, A2) et de l'appliquer à la sortie (5a, 5b) au moyen de circuits de sélection (8a, 9a ; 8b, 9b), **caractérisé en ce que** les circuits logiques (7a, 7b) sont conçus, en fonction de comparaisons par paires entre les signaux (S1a, S2a, Ex2 ; S1b, S2b, Ex1) reçus aux entrées (3a, 4a ; 3b, 4b) et à l'interface de communication (6a, 6b), pour sélectionner parmi ces signaux (S1a, S2a, Ex2 ; S1b, S2b, Ex1) le signal d'échange (Ex1, Ex2) et de le transmettre à l'interface de communication (6a, 6b) au moyen des circuits de sélection (8a, 9a ; 8b, 9b) et sont conçus pour délivrer un deuxième signal d'erreur (F2) sur l'interface de communication (6a, 6b) de l'unité de commande respective (2a, 2b) lorsque seules des comparaisons de paires négatives sont effectuées entre les signaux de capteur (S1a, S2a ; S1b, S2b) sont présents et qu'aucun ou plusieurs des signaux de capteur (S1a, S2a ; S1b, S2b) reçus aux entrées (3a, 4a ; 3b, 4b) de l'unité de commande respective (2a, 2b) n'a été confirmé dans la comparaison par paire avec le signal d'échange (Ex2, Ex1) reçu à l'interface de communication respective (6a, 6b).

2. Dispositif d'évaluation selon la revendication 1, **caractérisé en ce que** les circuits logiques (7a, 7b) sont conçus pour sélectionner l'un des signaux de capteur (S1a, S2a, S1b, S2b) reçus sur les entrées (3a, 4a ; 3b, 4b) de l'unité de commande respective (2a, 2b) comme signal de sortie (A1, A2) qui a été confirmé par au moins une comparaison de paires.

3. Dispositif d'évaluation selon la revendication 1 ou 2, **caractérisé en ce que** les circuits logiques (7a, 7b) sont conçus pour délivrer un premier signal d'erreur (F1) à la sortie (5a, 5b) de l'unité de commande respective (2a, 2b) lorsque seules des comparaisons de paires négatives sont présentes.

4. Dispositif d'évaluation selon l'une des revendications 1 à 3, **caractérisé en ce que** les circuits logiques (7a, 7b) sont conçus pour sélectionner l'un des signaux de capteur (S1a, S2a ; S1b, S2b) reçus aux entrées (3a, 4a ; 3b, 4b) de l'unité de commande respective (2a, 2b) comme signal d'échange (Ex1 ; Ex2) qui a été confirmé dans une comparaison par paire avec un signal de capteur reçu à une autre entrée (4a, 3a ; 4b, 3b) de l'unité de commande (S2a, S1a ; S2b, S1b) ou a été confirmé dans une comparaison par paire comme le seul des signaux de capteur (S1a, S2a ; S1b, S2b) reçus aux entrées (3a, 4a ; 3b, 4b) de l'unité de commande (2a, 2b) avec le signal d'échange (Ex2, Ex1) reçu par l'intermédiaire de l'interface de communication (6a, 6b).

5. Dispositif d'évaluation selon l'une des revendications 1 à 4, **caractérisé en ce que** des unités de détection d'erreurs (10a, 11a, 12a ; 10b, 11b, 12b) sont disposées aux entrées (3a, 4a ; 3b, 4b) et à l'interface de communication (6a, 6b), lesquelles unités de détection d'erreurs (10a, 11a, 12a ; 10b, 11b, 12b) sont conçues pour bloquer la réception de signaux erronés (S1a, S2a, Ex2 ; S1b, S2b, Ex1) aux entrées (3a, 4a ; 3b, 4b) et à l'interface de communication (6a, 6b).

6. Dispositif d'évaluation selon la revendication 5, **caractérisé en ce que** les circuits logiques (7a, 7b) sont adaptés pour sélectionner le signal de capteur sans erreur (S1a, S2a ; S1b, S2b) comme signal de sortie (A1, A2), dans le cas où un seul signal de capteur (S1a, S2a ; S1b, S2b) sans erreur est présent sur une entrée (3a, 4a ; 3b, 4b) de l'unité de commande (2a, 2b) respective et où la réception des autres signaux (S1a, S2a, Ex2 ; S1b, S2b, Ex1) aux autres entrées (3a, 4a ; 3b, 4b) et à l'interface de communication (6a, 6b) est bloquée par les unités de détection d'erreur (10a, 11a, 12a ; 10b, 11b, 12b),.

7. Dispositif d'évaluation selon la revendication 5 ou 6, **caractérisé en ce que** les circuits logiques (7a, 7b) sont adaptés pour délivrer un troisième signal d'erreur (F3) sur la sortie (5a, 5b) lorsque la réception des signaux de capteurs sur toutes les entrées (3a, 4a ; 3b, 4b) de l'unité de commande (2a ; 2b) est bloquée par les unités de détection d'erreurs (10a, 11a ; 10b, 11b).

8. Dispositif d'évaluation selon l'une des revendications 1 à 7, **caractérisé en ce que** le dispositif d'évaluation (1) est conçu pour évaluer exactement quatre signaux de capteur redondants (S1a, S2a, S1b, S2b) et les unités de commande (2a, 2b) présentent chacune exactement deux entrées (3a, 4a ; 3b, 4b) pour respectivement l'un des signaux de capteur redondants (S1a, S2a, S1b, S2b).

9. Dispositif d'évaluation selon l'une des revendications 1 à 8, **caractérisé en ce que** les unités de commande (2a, 2b) comprennent des circuits comparateurs (13a, 14a, 15a ; 13b, 14b, 15b) pour effectuer les comparaisons de paires.

10. Dispositif d'évaluation selon l'une des revendications 1 à 9, **caractérisé en ce que** les circuits logiques (7a, 7b) sont configurés pour effectuer d'abord des comparaisons par paires entre les signaux de capteurs (S1a, S2a ; S1b, S2b) et de ne prendre en compte le signal d'échange (Ex2, Ex1) reçu par l'autre unité de commande respective (2b ; 2a) que si aucun des signaux de capteur reçus (S1a, S2a ; S1b, S2b) n'a été confirmé dans une comparaison de paires.

11. Direction de véhicule automobile comprenant au moins quatre capteurs redondants (16, 17, 18, 19) pour la saisie de paramètres de direction et au moins un moteur électrique avec une commande de moteur pour la mise à disposition d'une force de direction dépendant des paramètres de direction pour les roues directrices, **caractérisé en ce que** la direction de véhicule automobile comprend en outre un dispositif d'évaluation (1) selon l'une des revendications 1 à 10, dont les entrées (3a, 4a, 3b, 4b) sont reliées aux capteurs (16, 17, 18, 19) et dont les sorties (5a, 5b) sont reliées à la commande moteur.

12. Direction de véhicule automobile selon la revendication 11, **caractérisée en ce que** les capteurs (16, 17, 18, 19) destinés à détecter les paramètres de direction sont des capteurs d'angle de direction, des capteurs de couple de direction, des capteurs de position de rotor du moteur électrique ou des capteurs de vitesse de véhicule automobile.
